# EUROPEAN PATENT APPLICATION

(11) **EP 4 545 057 A1**
(43) Date of publication of application: **30.04.2025**
(21) Application number: 23206375.0
(22) Date of filing: 27.10.2023
(51) Int. Cl.: A61H 3/06, G01S 3/14, G01S 5/02, G01S 7/00, G01S 13/00, G01S 13/04, G01S 13/87, G06F 1/16, G06F 3/16, G08C 17/02, H04W 4/33, H04W 4/80, G01S 13/93, A61B 5/0507, G01S 13/56, G01C 21/20, G01S 5/14, G01S 13/02, G01S 13/76, G01S 13/88, G02B 27/01, G09B 21/00

(54) **GUIDANCE SYSTEM AND METHOD OF OPERATING THE SAME**

(71) Applicant: NXP B.V., 5656 AG Eindhoven (NL)
(72) Inventor: Jespers, Frieder Jonas, 5656 AG Eindhoven (NL); Fellenberg, Christian, 5656 AG Eindhoven (NL)
(74) Representative: Krott, Michel

(57) **Abstract**

In accordance with a first aspect of the present disclosure, a guidance system is provided, comprising: a body-wearable device, said body-wearable device comprising an ultra-wideband (UWB) communication transceiver; a processing unit operatively coupled to the UWB communication transceiver, said processing unit being configured: receive an input from the UWB communication transceiver; execute a guidance function using the input received from the UWB communication transceiver. In accordance with a second aspect of the present disclosure, a corresponding method of operating a guidance system is conceived. In accordance with a third aspect of the present disclosure, a computer program is provided for carrying out said method.

## Description

### TECHNICAL FIELD

The present disclosure relates to a guidance system. Furthermore, the present disclosure relates to a corresponding method of operating a guidance system, and to a computer program for carrying out said method.

### BACKGROUND

It is difficult for visually impaired people to move around in buildings and outdoor spaces, because they are not able to clearly see obstacles in their pathway, and thus may often suffer from accidents. It is desirable to provide them with tools for properly guiding them through these buildings and outdoor spaces, such that the risk of accidents can be reduced.

### SUMMARY

In accordance with a first aspect of the present disclosure, a guidance system is provided, comprising: a body-wearable device, said body-wearable device comprising an ultra-wideband (UWB) communication transceiver; a processing unit operatively coupled to the UWB communication transceiver, said processing unit being configured: receive an input from the UWB communication transceiver; execute a guidance function using the input received from the UWB communication transceiver.

In one or more embodiments, the UWB communication transceiver is configured to operate in a radar mode.

In one or more embodiments, the UWB communication transceiver is configured to operate in a ranging mode.

In one or more embodiments, the guidance system further comprises a feedback unit operatively coupled to the processing unit, said feedback unit being configured to receive an output from the guidance function from the processing unit and to feedback said output to a user.

In one or more embodiments, the feedback unit is integrated into the body-wearable device.

In one or more embodiments, the feedback unit is an audio device.

In one or more embodiments, the audio device is an earphone or a pair of earphones.

In one or more embodiments, the body-wearable device is a head-wearable device, in particular a pair of glasses.

In one or more embodiments, the guidance system further comprises a plurality of directional antennas or an antenna array operatively coupled to the UWB communication transceiver.

In one or more embodiments, the directional antennas are millimeter wave (mmWave) antennas.

In one or more embodiments, the guidance system further comprises an omnidirectional antenna operatively coupled to the UWB communication transceiver.

In one or more embodiments, the guidance function is an indoor guidance function.

In one or more embodiments, the processing unit is integrated into the body-wearable device.

In accordance with a second aspect of the present disclosure, a method of operating a guidance system is conceived, said guidance system comprising a body-wearable device having an ultra-wideband, UWB, communication transceiver and a processing unit operatively coupled to the UWB communication transceiver, and the method comprising: receiving, by the processing unit, an input from the UWB communication transceiver; executing, by said processing unit, a guidance function using the input received from the UWB communication transceiver.

In accordance with a third aspect of the present disclosure, a computer program is provided, comprising executable instructions which, when executed by a processing unit comprised in a guidance system, carry out a method of the kind set forth.

### DESCRIPTION OF DRAWINGS

Embodiments will be described in more detail with reference to the appended drawings.
Fig. 1 shows an illustrative embodiment of a guidance system.
Fig. 2 shows another illustrative embodiment of a guidance system.
Fig. 3 shows an illustrative embodiment of a method of operating a guidance system.
Fig. 4 shows a further illustrative embodiment of a guidance system.
Fig. 5 shows an illustrative embodiment of an application scenario.

### DESCRIPTION OF EMBODIMENTS

According to the World Health Organization, there are 285 million visually impaired people in the world, 39 million of whom are completely blind. All of those people are relying on the compensation of their missing sight by use of a different sense. Basic approaches for this compensation are sonar-like human echolocation, where hearing is used to detect echoes of clicking noises made by the mouth, or, as in most cases, tactile feedback. This tactile feedback can be a guide person, a guide dog, or the white cane, which is the most common orientation aid. The white cane is a stick held by the user to scan its close environment on the ground level to a range of about 1 m. This task is performed precisely and reliably. But owing to the design, obstacles outside of the cane's reach cannot be detected by the user. This can lead to dangerous situations and injuries, for example by obstacles placed on head height, like tree branches or lorry mirrors. Radar-based handheld devices have been proposed by academia to solve this problem. An example of such a device is described in the paper "A Radar-Based HandHeld Guidance Aid for the Visually Impaired", written by Alexander Orth et al. and published at the German Microwave Conference (GeMiC), in 2020. However, such handheld devices are often not convenient. Furthermore, they typically do not incorporate an indoor localization-based guidance system.

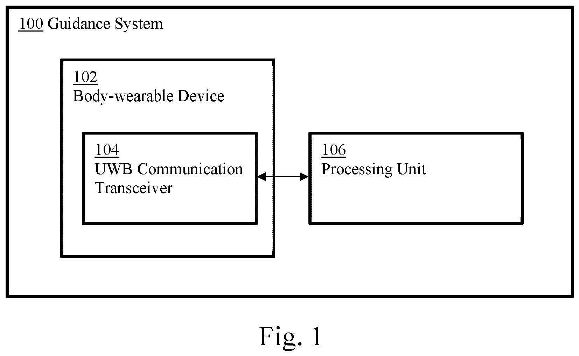

**Fig. 1** shows an illustrative embodiment of a guidance system 100. The guidance system 100 comprises a body-wearable device 102, which in turn comprises an ultra-wideband (UWB) communication transceiver 104. Furthermore, the guidance system 100 comprises a processing unit 106. In accordance with the present disclosure, the processing unit 106 is configured to receive an input from the UWB communication transceiver 104. Furthermore, the processing unit 106 is configured to execute a guidance function using the input received from the UWB communication transceiver 104. In this way, users can be guided more easily in order to avoid obstacles in their pathway. More specifically, the UWB communication transceiver 104 facilitates detecting objects in the surroundings of the user, and the processing unit 106 may execute the guidance function using the detected objects, as well as their location, as input. It is noted that in this embodiment the processing unit 106 does not form part of the body-wearable device 102. Instead, the processing unit 106 may form part of a handheld device, such as a mobile phone, which is operatively coupled to the body-wearable device 102 via a wireless communication channel.

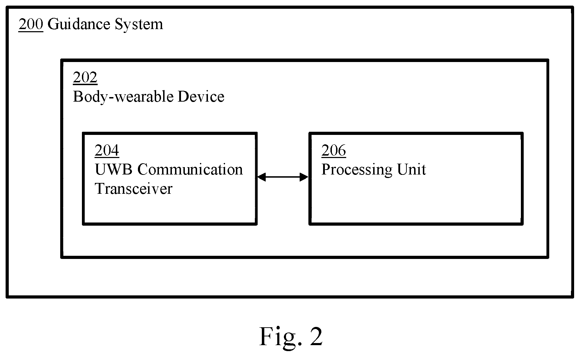

**Fig. 2** shows another illustrative embodiment of a guidance system 200. The guidance system 200 comprises a body-wearable device 202, which in turn comprises a UWB communication transceiver 204 and a processing unit 206. In accordance with the present disclosure, the processing unit 206 is configured to receive an input from the UWB communication transceiver 204. Furthermore, the processing unit 206 is configured to execute a guidance function using the input received from the UWB communication transceiver 204. As explained with reference to Fig. 1 above, in this way, users can be guided more easily in order to avoid obstacles in their pathway. It is noted that in this embodiment the processing unit 206 forms part of the body-wearable device 202. Thereby, a wireless communication with an external processing device may be avoided, which facilitates realizing an integrated, single-device solution for guiding users.

In one or more embodiments, the UWB communication transceiver is configured to operate in a radar mode. In this way, obstacles in the surroundings of a user may easily be detected. Furthermore, the location of these obstacles relative to the user may easily be determined, provided that the UWB communication transceiver is coupled to multiple antennas or to a directional antenna. In one or more embodiments, the UWB communication transceiver is configured to operate in a ranging mode. In this way, distances between the user and one or more external UWB communication nodes (e.g., fixed UWB anchors) may be determined. This, in turn, facilitates determining the location of the user and computing a path in which the obstacles, whose location may be obtained by UWB-based radar operations, are avoided.

In one or more embodiments, the guidance system further comprises a feedback unit operatively coupled to the processing unit, said feedback unit being configured to receive an output from the guidance function from the processing unit and to feedback said output to a user. This further facilitates guiding users in order to avoid obstacles in their pathway. In one or more embodiments, the feedback unit is integrated into the body-wearable device. This further facilitates realizing an integrated, single-device solution for guiding users. In a practical implementation, the feedback unit is an audio device. In a further practical implementation, the audio device is an earphone or a pair of earphones.

In one or more embodiments, the body-wearable device is a head-wearable device, in particular a pair of glasses. This further facilitates guiding users in order to avoid obstacles in their pathway. In particular, head-wearable devices such as glasses (or sunglasses) are relatively easy to wear and may easily be equipped with the above-described UWB communication transceiver. In one or more embodiments, the guidance system further comprises a plurality of directional antennas or an antenna array operatively coupled to the UWB communication transceiver. In this way, the UWB communication transceiver may be enabled to operate in a radar mode. In one or more embodiments, the directional antennas are millimeter wave (mmWave) antennas. This results in a practical implementation. Furthermore, in one or more embodiments, the guidance system further comprises an omnidirectional antenna. In this way, the UWB communication transceiver may be enabled to operate in a ranging mode. In one or more embodiments, the guidance function is an indoor guidance function. This facilitates guiding users in order to avoid obstacles in buildings and other indoor environments.

UWB communication technology - also referred to as impulse-radio ultra-wideband (IR-UWB) technology - is a technology that uses a high signal bandwidth, in particular for transmitting digital data over a wide spectrum of frequency bands with very low power. For example, UWB technology may use the frequency spectrum of 3.1 to 10.6 GHz and may feature a high-frequency bandwidth of more than 500 MHz and very short pulse signals, potentially capable of supporting high data rates. The UWB technology enables a high data throughput for communication devices and a high precision for the localization of devices. In particular, UWB communication technology may be used for so-called ranging operations, i.e. for determining the distance between communicating devices. Therefore, UWB technology may be used to advantage in various applications, such as automotive applications. Typical distance measurement methods are the so-called single-sided two-way ranging (SS-TWR) method and the double-sided two-way ranging (DS-TWR) method. In addition to ranging operations of this kind, UWB devices may also carry out radar operations. Thus, UWB devices may operate in a ranging mode and in a radar mode.

In a ranging mode of operation, frames will typically be exchanged between two devices via at least one antenna on each device, and at least a SS-TWR operation will be carried out (which may also be referred to as a ping-pong operation). In particular, channel impulse responses (CIRs) are estimated on both devices, timestamps will be generated based on the CIRs on both devices, and those timestamps are exchanged. Then, a time of flight (ToF) is calculated based on the timestamps and a range (i.e., a distance) is calculated based on the ToF. Alternatively, a DS-TWR operation may be carried out (which may also be referred to as a ping-pong-ping operation). It is noted that an angle-of-arrival (AoA) mode of operation is similar to a ranging mode, but it involves at least two antennas on one device. In particular, in an AoA mode of operation, two phase values associated with at least two CIRs are calculated on one device. Then, a phase difference of arrival (PDoA) is calculated based on the two phase values, and an AoA is calculated based on the PDoA. An AoA mode of operation may facilitate a more accurate determination of the position of an object, and may thus complement ranging operations performed in the ranging mode. As used in this description, the ranging mode of operation may therefore be extended to include the AoA mode of operation, in the sense that when a device operates in the ranging mode, it may optionally perform additional operations which are typically performed in the AoA mode of operation. Furthermore, as used herein, the ranging mode may include performing operations based on a so-called Time Difference of Arrival (TDoA) technique, instead of a ToF technique. The TDoA technique is particularly suitable for real-time localization operations. Generally speaking, the term "ranging mode" covers all types localization operations based on UWB message exchanges with an external UWB communication device. It is noted that AoA calculations may be used in combination with both ToF calculations and TDoA calculations.

In a radar mode of operation, frames are transmitted by at least one device and those frames are received by the same device and/or by one or more other devices. Then, the CIRs are estimated on the device or devices receiving the frames, and the range and/or velocity and/or AoA are calculated based on the estimated CIRs. Thus, AoA calculations may also be performed in the radar mode of operation. A radar mode of operation may be used to advantage to detect (i.e., sense) the presence of objects or human beings. However, a radar mode of operation may also be used to estimate a distance, although with a lower accuracy than the ranging mode of operation will typically achieve. The skilled person will appreciate that the given examples are nonlimiting examples of how the different modes of operation can be implemented. In other words, the modes may be implemented differently, depending on the requirements imposed by the application, for example.

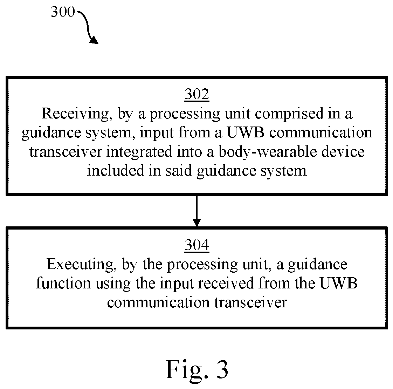

**Fig. 3** shows an illustrative embodiment of a method 300 of operating a guidance system. The method 300 comprises the following steps. At 302, a processing unit comprised in a guidance system receives input from a UWB communication transceiver integrated into a body-wearable device included in said guidance system. Furthermore, at 304, the processing unit executes a guidance function using the input received from the UWB communication transceiver. In this way, users can be guided more easily in order to avoid obstacles in their pathway. More specifically, as mentioned above, using the UWB communication transceiver facilitates detecting objects in the surroundings of a user, and the processing unit may execute the guidance function using the detected objects, as well as their location, as input.

In an implementation of the presently disclosed guidance system, a UWB communication chip may be integrated into a pair of glasses for people with visual impairments, for the double use of detecting obstacles in their pathways based on radar operations and for indoor localization based on ranging operations. This integration enables an enhanced indoor guidance system for people with visual impairments. Furthermore, privacy may be preserved because radar-based obstacle detection is performed instead of vision-based obstacle detection.

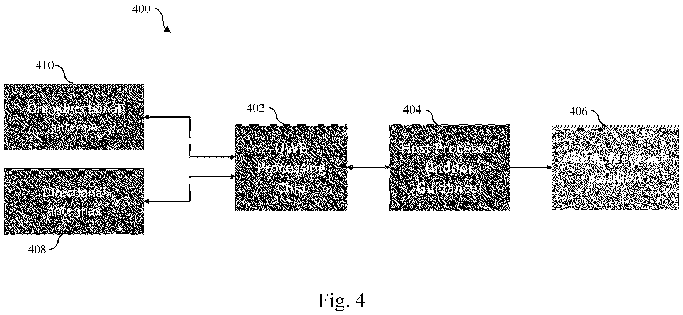

**Fig. 4** shows a further illustrative embodiment of a guidance system 400. The guidance system 400 comprises a UWB processing chip 402, a host processor 404 for enabling indoor guidance, and an aiding feedback solution 406 (such as an audio device). The UWB processing chip 402 is an example of a UWB communication transceiver of the kind set forth above. Furthermore, the host processor 404 is an example of a processing unit of the kind set forth. In addition, the guidance system 400 comprises a plurality of directional antennas 408, as well as an omnidirectional antenna 410. It is noted that the guidance system 400 may be fully integrated into a single body-wearable device, such as a pair of glasses or sunglasses. This results in a reliable, single-device solution for guiding used to avoid obstacles. Alternatively, the host processor 404 and/or the aiding feedback solution 406 may form part of another device, such as a handheld device. The UWB processing chip 402 may run in a radar mode to detect obstacles, or in a ranging mode to measure the distances to known anchor positions. To do so, the guidance system 400 makes use of one or more directional antennas 408 (such as mmWave antennas) and an omnidirectional antenna 410.

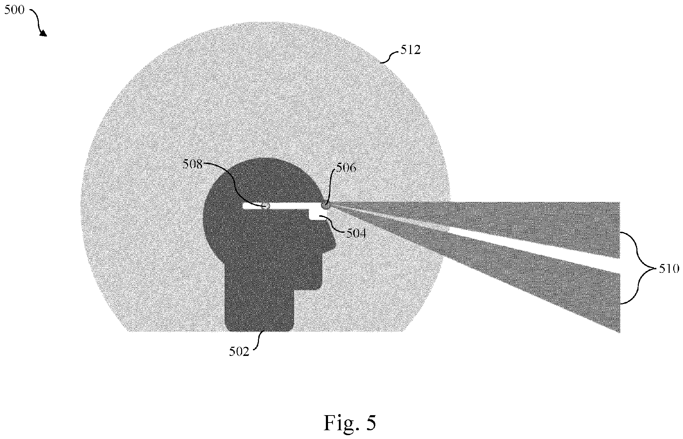

**Fig. 5** shows an illustrative embodiment of an application scenario 500. In this scenario 500, a guidance system as shown in Fig. 4 is used. In particular, a user 502 is wearing a body-wearable device 504 implemented as a pair of glasses. The body-wearable device 504 comprises a UWB communication transceiver of the kind set forth (not shown) and a processing unit of the kind set forth (not shown). In addition, the body-wearable device 504 comprises a pair of directional antennas 506 and an omnidirectional antenna 508. Specifically, the directional antennas 506, which cover the scanning area 510, enable the UWB communication transceiver to operate in a radar mode. Furthermore, the omnidirectional antenna 508, which covers the scanning area 512, enables the UWB communication transceiver to operate in a ranging mode. The directional antennas 506 are used to sample the environment in front of the person in the radar mode (i.e., to sample the scanning area 510), while the omnidirectional antenna 508 is used for communication with UWB anchor devices (not shown) to perform ranging (in the scanning area 512). It is noted that the directional antennas 506 and omnidirectional antenna 508 will typically be used alternately, such that the UWB communication transceiver will switch between the radar mode and the ranging mode. Furthermore, the ranging data and the detected obstacles are forwarded to the host processor, which is capable of accomplishing the localization and indoor guidance. As soon as objects are detected in front of the user 502, he or she may be informed by the aiding feedback solution (e.g., via sound over the earphones). Together with the known position, this allows the person to be guided in an appropriate manner.

The systems and methods described herein may at least partially be embodied by a computer program or a plurality of computer programs, which may exist in a variety of forms both active and inactive in a single computer system or across multiple computer systems. For example, they may exist as software program(s) comprised of program instructions in source code, object code, executable code or other formats for performing some of the steps. Any of the above may be embodied on a computer-readable medium, which may include storage devices and signals, in compressed or uncompressed form.

As used herein, the term "computer" refers to any electronic device comprising a processor, such as a general-purpose central processing unit (CPU), a specific-purpose processor or a microcontroller. A computer is capable of receiving data (an input), of performing a sequence of predetermined operations thereupon, and of producing thereby a result in the form of information or signals (an output). Depending on the context, the term "computer" will mean either a processor in particular or more generally a processor in association with an assemblage of interrelated elements contained within a single case or housing.

The term "processor" or "processing unit" refers to a data processing circuit that may be a microprocessor, a co-processor, a microcontroller, a microcomputer, a central processing unit, a field programmable gate array (FPGA), a programmable logic circuit, and/or any circuit that manipulates signals (analog or digital) based on operational instructions that are stored in a memory. The term "memory" refers to a storage circuit or multiple storage circuits such as read-only memory, random access memory, volatile memory, non-volatile memory, static memory, dynamic memory, Flash memory, cache memory, and/or any circuit that stores digital information.

As used herein, a "computer-readable medium" or "storage medium" may be any means that can contain, store, communicate, propagate, or transport a computer program for use by or in connection with the instruction execution system, apparatus, or device. The computer-readable medium may be, for example but not limited to, an electronic, magnetic, optical, electromagnetic, infrared, or semiconductor system, apparatus, device, or propagation medium.

It is noted that the embodiments above have been described with reference to different subject-matters. In particular, some embodiments may have been described with reference to method-type claims whereas other embodiments may have been described with reference to apparatus-type claims. However, a person skilled in the art will gather from the above that, unless otherwise indicated, in addition to any combination of features belonging to one type of subject-matter also any combination of features relating to different subject-matters, in particular a combination of features of the method-type claims and features of the apparatus-type claims, is considered to be disclosed with this document.

Furthermore, it is noted that the drawings are schematic. In different drawings, similar or identical elements are provided with the same reference signs. Furthermore, it is noted that in an effort to provide a concise description of the illustrative embodiments, implementation details which fall into the customary practice of the skilled person may not have been described. It should be appreciated that in the development of any such implementation, as in any engineering or design project, numerous implementation-specific decisions must be made in order to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill.

Finally, it is noted that the skilled person will be able to design many alternative embodiments without departing from the scope of the appended claims. In the claims, any reference sign placed between parentheses shall not be construed as limiting the claim. The word "comprise(s)" or "comprising" does not exclude the presence of elements or steps other than those listed in a claim. The word "a" or "an" preceding an element does not exclude the presence of a plurality of such elements. Measures recited in the claims may be implemented by means of hardware comprising several distinct elements and/or by means of a suitably programmed processor. In a device claim enumerating several means, several of these means may be embodied by one and the same item of hardware. The mere fact that certain measures are recited in mutually different dependent claims does not indicate that a combination of these measures cannot be used to advantage.

### LIST OF REFERENCE SIGNS

- 100: guidance system
- 102: body-wearable device
- 104: UWB communication transceiver
- 106: processing unit
- 200: guidance system
- 202: body-wearable device
- 204: UWB communication transceiver
- 206: processing unit
- 300: method of operating a guidance system
- 302: receiving, by a processing unit comprised in a guidance system, input from a UWB communication transceiver integrated into a body-wearable device included in said guidance system
- 304: executing, by the processing unit, a guidance function using the input received from the UWB communication transceiver
- 400: guidance system
- 402: UWB processing chip
- 404: host processor (indoor guidance)
- 406: aiding feedback solution
- 408: directional antennas
- 410: omnidirectional antenna
- 500: application scenario
- 502: user
- 504: body-wearable device
- 506: directional antennas
- 508: omnidirectional antenna
- 510: radar mode scanning area
- 512: ranging mode scanning area

## Claims

1. A guidance system, comprising:
a body-wearable device, said body-wearable device comprising an ultra-wideband, UWB, communication transceiver;
a processing unit operatively coupled to the UWB communication transceiver, said processing unit being configured:
receive an input from the UWB communication transceiver;
execute a guidance function using the input received from the UWB communication transceiver.

2. The guidance system of claim 1, wherein the UWB communication transceiver is configured to operate in a radar mode.

3. The guidance system of claim 1 or 2, wherein the UWB communication transceiver is configured to operate in a ranging mode.

4. The guidance system of any preceding claim, further comprising a feedback unit operatively coupled to the processing unit, said feedback unit being configured to receive an output from the guidance function from the processing unit and to feedback said output to a user.

5. The guidance system of claim 4, wherein the feedback unit is integrated into the body-wearable device.

6. The guidance system of claim 4 or 5, wherein the feedback unit is an audio device.

7. The guidance system of claim 6, wherein the audio device is an earphone or a pair of earphones.

8. The guidance system of any preceding claim, wherein the body-wearable device is a head-wearable device, in particular a pair of glasses.

9. The guidance system of any preceding claim, further comprising a plurality of directional antennas or an antenna array operatively coupled to the UWB communication transceiver.

10. The guidance system of claim 8, wherein the directional antennas are millimeter wave, mmWave, antennas.

11. The guidance system of any preceding claim, further comprising an omnidirectional antenna operatively coupled to the UWB communication transceiver.

12. The guidance system of any preceding claim, wherein the guidance function is an indoor guidance function.

13. The guidance system of any preceding claim, wherein the processing unit is integrated into the body-wearable device.

14. A method of operating a guidance system, said guidance system comprising a body-wearable device having an ultra-wideband, UWB, communication transceiver and a processing unit operatively coupled to the UWB communication transceiver, and the method comprising:
receiving, by the processing unit, an input from the UWB communication transceiver;
executing, by said processing unit, a guidance function using the input received from the UWB communication transceiver.

15. A computer program comprising executable instructions which, when executed by a processing unit comprised in a guidance system, carry out the method of claim 14.

## Amended claims

### Amended claims in accordance with Rule 137(2) EPC.

1. A guidance system (100, 200), comprising:
a body-wearable device (102, 202), said body-wearable device (102, 202) comprising an ultra-wideband, UWB, communication transceiver (104, 204), wherein the body-wearable device (102, 202) is a pair of glasses;
a processing unit (106, 206) operatively coupled to the UWB communication transceiver (104, 204), said processing unit (106, 206) being configured:
receive an input from the UWB communication transceiver (104, 204);
execute an indoor guidance function using the input received from the UWB communication transceiver (104, 204);
**characterized in that** the UWB communication transceiver (104, 204) is configured to operate in a radar mode for the purpose of detecting obstacles in pathways and to operate in a ranging mode for the purpose of indoor localization.

2. The guidance system (100, 200) of claim 1, further comprising a feedback unit operatively coupled to the processing unit (106, 206), said feedback unit being configured to receive an output from the guidance function from the processing unit (106, 206) and to feedback said output to a user.

3. The guidance system (100, 200) of claim 2, wherein the feedback unit is integrated into the body-wearable device (102, 202).

4. The guidance system (100, 200) of claim 2 or 3, wherein the feedback unit is an audio device.

5. The guidance system (100, 200) of claim 4, wherein the audio device is an earphone or a pair of earphones.

6. The guidance system (100, 200) of any preceding claim, further comprising a plurality of directional antennas or an antenna array operatively coupled to the UWB communication transceiver (104, 204).

7. The guidance system (100, 200) of claim 6, wherein the directional antennas are millimeter wave, mmWave, antennas.

8. The guidance system (100, 200) of any preceding claim, further comprising an omnidirectional antenna operatively coupled to the UWB communication transceiver (104, 204).

9. The guidance system (100, 200) of any preceding claim, wherein the processing unit (106, 206) is integrated into the body-wearable device (102, 202).

10. A method (300) of operating a guidance system, said guidance system comprising a body-wearable device being a pair of glasses and having an ultra-wideband, UWB, communication transceiver and a processing unit operatively coupled to the UWB communication transceiver, and the method comprising:
receiving (302), by the processing unit, an input from the UWB communication transceiver;
executing (304), by said processing unit, an indoor guidance function using the input received from the UWB communication transceiver;
**characterized in that** the UWB communication transceiver operates in a radar mode for the purpose of detecting obstacles in pathways and in a ranging mode for the purpose of indoor localization.

11. A computer program comprising executable instructions which, when executed by a processing unit comprised in a guidance system, carry out the method (300) of claim 10.
